**Europäisches Patentamt**

**European Patent Office**

**Office européen des brevets**

(11) Veröffentlichungsnummer: **0 169 814**

**A1**

## (12) EUROPÄISCHE PATENTANMELDUNG

(21) Anmeldenummer: **85810335.1**

(22) Anmeldetag: **22.07.85**

(51) Int. Cl.⁴: **A 62 C 4/02**
**B 01 D 45/04, B 01 D 47/06**

(30) Priorität: **27.07.84 CH 3656/84**

(43) Veröffentlichungstag der Anmeldung:
**29.01.86 Patentblatt 86/5**

(84) Benannte Vertragsstaaten:
**AT BE CH DE FR GB IT LI NL SE**

(71) Anmelder: **CIBA-GEIGY AG**
**Klybeckstrasse 141**
**CH-4002 Basel(CH)**

(72) Erfinder: **Schneider, Jürg**
**Rebenweg 8**
**CH-4412 Nuglar(CH)**

(72) Erfinder: **Bartknecht, Wolfgang, Dr.**
**Egerstrasse 12**
**D-7858 Weil am Rhein(DE)**

(54) **Anlage zur Produktion oder Verarbeitung von chemischen Produkten.**

(57) In chemischen Anlagen mit Anfall von explosionsfähigen und gleichzeitig reinigungsbedürftigen Gasgemischen sind üblicherweise eigene Flammensperren zur Verhinderung der Ausbreitung von Explosionen und Detonationen vorgesehen. Diese Flammensperren sind bei der anmeldungsgemässen Anlage nunmehr direkt in die Wascheinrichtungen (600) für das Gasgemisch integriert, indem eine bisher unerkannt gebliebene Eigenschaft der Abscheidewände (621,622,623,624) von nass-mechanischen Gaswascheinrichtungen, nämlich gleichzeitig auch flammensperrend zu wirken, ausgenützt wird. Auf diese Weise wird das vor allem bei stark schwebstoffhaltigen Gasgemishen akute Problem der Verstopfung bisheriger Flammensperren wirksam gelöst.

Fig. 1

EP 0 169 814 A1

CIBA-GEIGA AG

Basel (Schweiz)                                    7-15018/+


## Anlage zur Produktion oder Verarbeitung von chemischen Produkten.

Die Erfindung betrifft eine Anlage zur Produktion oder Verarbeitung von chemischen Produkten gemäss Oberbegriff von Patentanspruch 1. Ferner betrifft die Erfindung die Verwendung einer nassmechanischen Gaswaschvorrichtung.

In chemischen Produktions- oder Verarbeitungsanlagen fallen vielfach sog. hybride Gemische, also staubbeladene explosionsfähige Gase und Gasgemische an, welche besondere Massnahmen bezüglich Explosionsschutz erforderlich machen. Eine dieser Massnahmen besteht darin, solche hybride Gemische führenden Leitungen mit Flammensperren zu versehen, um die Ausbreitung von allfälligen Explosionen und ggf. auch Detonationen zu unterbinden.

Anderseits besteht vielfach auch die Notwendigkeit, insbesondere auch aus ökologischen Gründen, diese Gase und Gasgemische von unerwünschten Bestandteilen zu befreien. Dazu gehören in erster Linie partikuläre Verunreinigungen und übelriechende oder aus anderen Gründen umweltbelastende Komponenten. Zur Reinigung von Gasen stehen die verschiedenartigsten Gaswascheinrichtungen zur Verfügung, besonders zweckmässig sind nassmechanische Typen, wie sie z.B. in der US-PS 4 159 196 beschrieben sind.

Als Flammensperren oder -sicherungen werden in vielen Fällen Typen eingesetzt, die auf dem Prinzip der Querschnitts-Unterteilung basieren. Weit verbreitet sind dabei sog. Bandsicherungen, bei denen wellige und flache Metallbänder abwechselnd geschichtet sind und zwischen sich eine Vielzahl von engen Kanälen bilden, durch welche

zwar das explosionsgefährdete Gasgemisch strömen kann, eine Explosion jedoch aufgefangen wird (vgl. z.B. das Buch "Explosionen" von W. Bartknecht, Springer-Verlag 1978).

Derartige und vergleichbare feinkanalige Bandsicherungen neigen stark zum Verstopfen, und zwar insbesondere, wenn das Gasgemisch einen höheren Schwebstoffgehalt aufweist. Bei stark verstaubten hybriden Gemischen ergibt sich daher die Notwendigkeit, die Bandsicherungen in verhältnismässig kurzen Intervallen auszutauschen bzw. zu erneuern. Dies wird in vielen Fällen als nachteilig empfunden.

Durch die Erfindung soll nun das Verstopfungsproblem von Flammensperren bei chemischen Produktions- oder Verarbeitungsanlagen mit Anfall von stark verschmutzten Gasen gelöst werden.

Die erfindungsgemässe Anlage ist in Patentanspruch 1 beschrieben. Bevorzugte Ausführungsformen und Weiterbildungen ergeben sich aus den abhängigen Ansprüchen.

Die Erfindung beruht somit auf der bislang völlig unerkannt und entsprechend ungenutzt gebliebenen Tatsache, dass die Abscheider von nassmechanischen Gaswascheinrichtungen prinzipiell auch als Flammensperre wirken können. In besonderem Masse gilt dies, wenn die Abscheider im Hinblick auf diese zusätzliche Funktion adaptiert bzw. konzipiert werden bzw. wenn solche Abscheider eingesetzt werden, die aufgrund ihrer Form schon von vornherein gute flammensperrende Eigenschaften aufweisen. Letzteres ist, wie Untersuchungen gezeigt haben, zum Beispiel für die in der US-PS 4 159 196 beschriebenen Abscheidewände der Fall.

Durch die erfindungsgemässe funktionelle Vereinigung von Gaswascheinrichtung und Flammensperre wird nicht nur der konstruktive Aufwand für eine separate Flammensperre eingespart, sondern, was für die Praxis noch stärker ins Gewicht fällt, das Problem der Verstopfung der Flammensperre bei verstaubten Gasgemischen wesentlich reduziert. Beim Einsatz von Gaswascheinrichtungen gemäss der schon genannten US-PS 4 159 196 fällt das Verstopfungsproblem überhaupt weg, da die dort beschriebenen Abscheider selbstreinigend ausgebildet sind und sich damit erst gar nicht verstopfen.

Im folgenden wird die Erfindung anhand der Zeichnung näher erläutert. Es zeigen:

Fig. 1 und 2      eine schematische Darstellung je eines Ausschnitts
                  einer erfindungsgemässen Anlage in zwei verschiede-
                  nen Ansichten,
Fig. 3            eine ausschnittsweise Ansicht einer erfindungsgemässen Abscheidewand,
Fig. 4            einen Schnitt nach der Linie IV-IV der Fig. 3 und
Fig. 5 bis 7      Detailvarianten entsprechend Fig. 4.

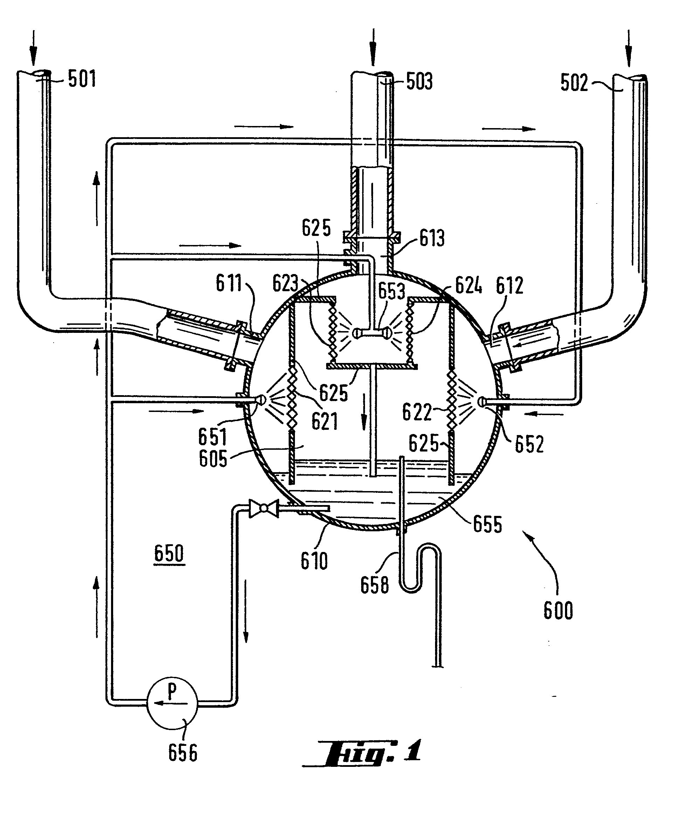

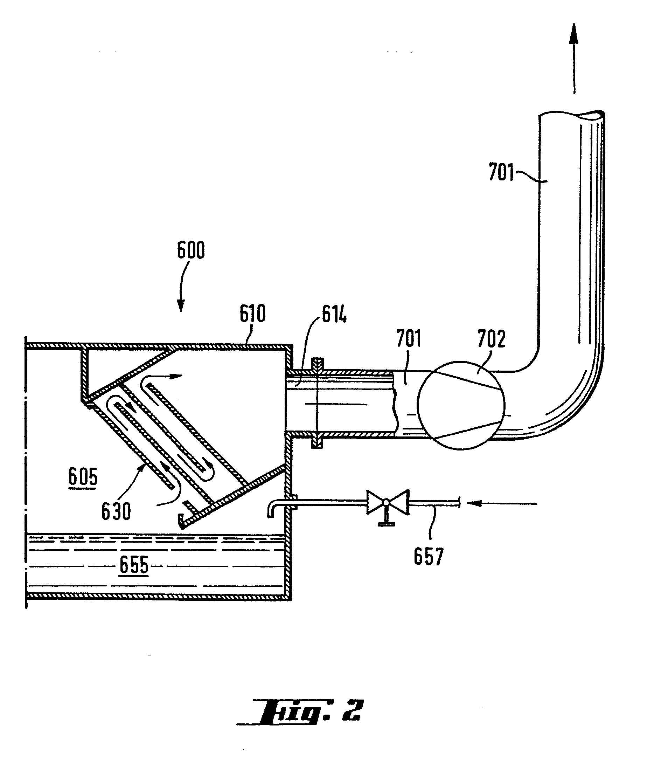

Bei der in den Fig. 1 und 2 ausschnittsweise dargestellten Anlage kann es sich um eine beliebige chemische Fabrikations- oder Bearbeitungsanlage handeln, bei deren Betrieb umweltbelastende und explosionsgefährdete Gase oder Gasgemische anfallen. Die Gase werden über Rohrleitungen 501, 502 und 503 einer als Ganzes mit 600 bezeichneten Gaswascheinrichtung zugeführt und verlassen diese als gereinigte Abluft über eine mit einem Gebläse 702 versehene Rohrleitung 701 ins Freie.

Die Gaswascheinrichtung ist voll und ganz nach den Prinzipien der schon genannten US-PS 4 159 196 aufgebaut. Sie umfasst ein als zylindrischer Kessel ausgebildetes Gehäuse 610 mit Anschlüssen 611, 612, 613 und 614 für die Gaszufuhrleitungen 501, 502 und 503 und die Abluftleitung 701, Abscheidewände 621, 622, 623 und 624 sowie einen Tropfenabscheider 630 im Gehäuse 610 und ein Kreislaufsystem 650 für Waschflüssigkeit.

Im Gehäuse 610 sind an den Kreislauf 650 angeschlossene Düsen 651, 652 und 653 zum Einspritzen von Waschflüssigkeit in die Abscheidewände 621 bis 624 bzw. die durch sie durchtretenden Gasströme angeordnet. Verschmutzte Waschflüssigkeit sammelt sich im unteren Gehäuseteil zu einem Sumpf 655, von dem sie über eine im Kreislauf 650 angeordnete Pumpe 656 zu den Düsen 651 bis 653 zurückgeführt wird. Ueber eine Leitung 657 wird laufend oder intermittierend frische Waschflüssigkeit zugeführt, wobei das Niveau des Sumpfs 655 durch einen Ueberlauf 658 konstant gehalten wird.

Die Funktionsweise der Wascheinrichtung entspricht ebenfalls ganz denjenigen der US-PS 4 159 196 und braucht daher hier nicht erläutert zu werden. Es sei lediglich erwähnt, dass die zu reinigenden explosionsgefährdeten Gasströme aus den Zufuhrleitungen 501 bis 503 in das Gehäuse 610 eingeführt und darin durch die Abscheidewände 621 bis 624 durchgeführt werden, um sich dann zu vereinigen und gemeinsam über den Tropfenabscheider 630 und die Leitung 701 ins Freie zu gelangen.

Der Tropfenabscheider 630 ist vorzugsweise von der in der US-PS 3 925 040 beschriebenen Art.

Die Abscheidewände 621 bis 624 sind im Gehäuse 610 mittels Trennwänden 625 so angeordnet, dass jedem Gaseinlass 611 bis 613 mindestens eine Abscheidewand zugeordnet ist und alle Gaszufuhrleitungen untereinander und von der Abgasleitung 701 sowie dem zentralen Kesselinnenraum 605 durch die Abscheidewände getrennt sind. Da die Abscheidewände, wie schon weiter vorne erwähnt, erfindungsgemäss als Flammensperre ausgebildet sind bzw. gleichzeitig die Funktion von Flammensperren übernehmen, wird auf diese Weise die Ausbreitung von allfälligen Explosionen wirksam unterbunden.

Die Abscheidewände 621 bis 624 können eine beliebige Konfiguration besitzen. In der Fig. 1 sind sie der Einfachheit halber eben dargestellt, sie könnten aber genau so gut oder, wenn eine möglichst grosse wirksame Fläche auf relativ kleinem Raum angestrebt wird, sogar mit Vorteil auch kastenförmig oder zickzackförmig abgewinkelt ausgebildet sein.

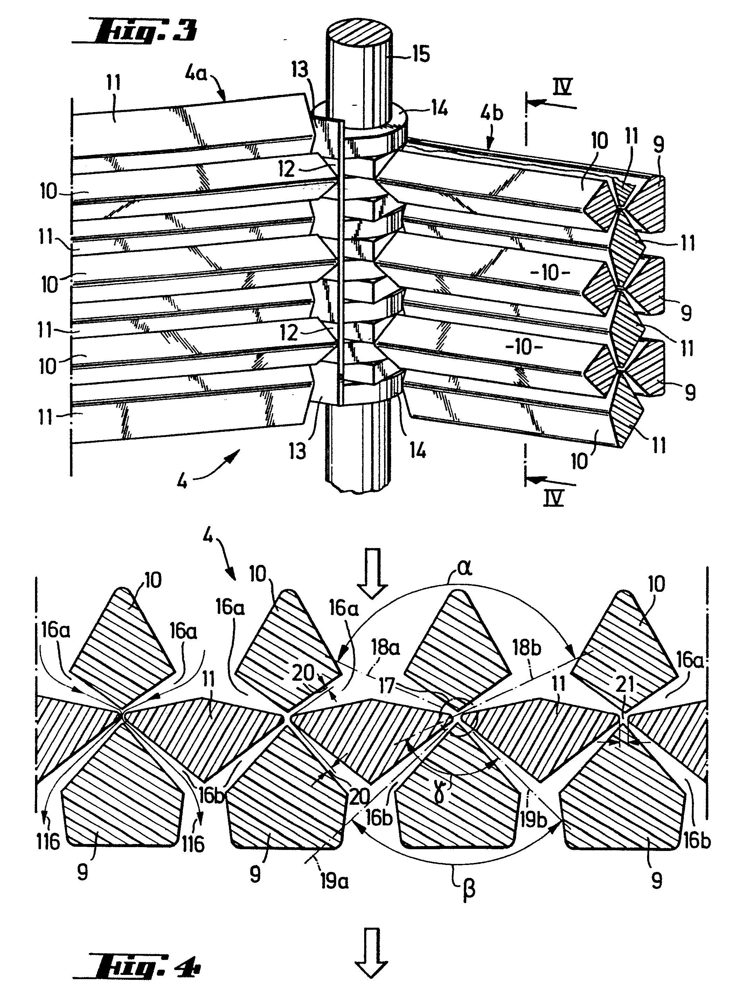

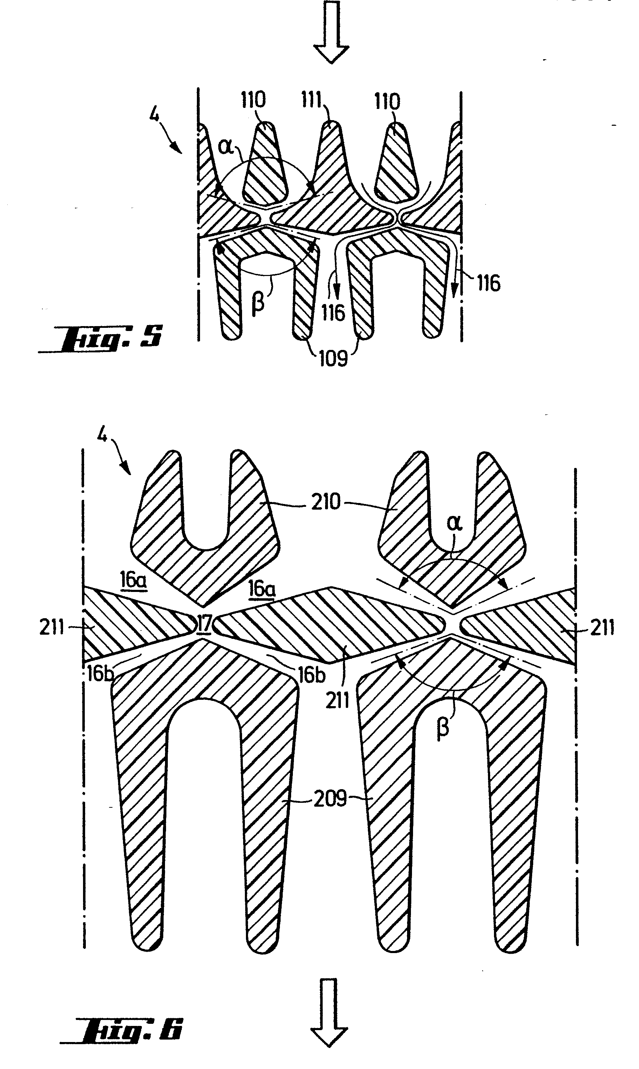

In Fig. 3 ist ein Ausschnitt aus einer zickzackförmig abgewinkelten Abscheidewand dargestellt. Die Wand 4 besteht aus einer Reihe von untereinander scharnierartig verbundenen Teilwänden 4a, 4b etc., welche jeweils aus einer Reihe von in gegenseitigem Abstand gehaltenen Kunststoff-Profilstäben 9, 10 und 11 aufgebaut sind. Jeweils die Stäbe 9 und 10 sind an ihren Enden mit gemeinsamen Stirnplatten 12 versehen und werden von diesen in gegenseitigem Abstand (Fig. 4) gehalten. Die Stäbe 11 besitzen ebenfalls Stirnplatten 13 und werden mittels dieser von den Stabpaaren 9, 10 distanziert. An den Stirnplatten 12 und 13 sind Scharnierringe 14 angebracht bzw. einstückig mit diesen verbunden. Die einzelnen Profilstäbe 9 und 10 sind nebeneinander und mit den Profilstäben 11 abwechselnd übereinander angeordnet und über die Scharnierringe 14 mittels Scharnierzapfen 15 zusammengehalten.

Die Profilstäbe bilden zwischen sich in der Abscheidewand 4 Durchtrittsschlitze 16a und 16b, durch welche das zu reinigende Gas im Betrieb hindurch gedrückt oder gesaugt wird. Die dazu nötigen Druck- bzw. Saugmittel sind der Einfachheit halber nicht dargestellt. Die Durchtrittsschlitze 16a und 16b verjüngen sich von aussen nach innen und laufen jeweils paarweise V-förmig zusammen, um im Bereich 17 X-förmig ineinanderzumünden. Das durch die Wand 4 durchtretende Gas teilt sich aufgrund der Schlitze in Teilströme auf, deren Strömungspfade durch die Pfeile 116 angedeutet sind. Die Teilströme in zwei ineinander mündenden Schlitzen 16a prallen in den Mündungsbereichen 17 aufeinander, lenken sich dabei selbst um und strömen durch die Schlitze 16b wieder ab. Die Strömungspfade 166 weisen also in den Mündungsbereichen 17 eine starke Krümmung auf. Durch das heftige Aufeinanderprallen der Teilströme in den Mündungsbereichen wird ein Festsetzen von Partikeln in den am meisten gefährdeten, engen und stark gekrümmten Schlitzbereichen weitestgehend verhindert.

Zur Erreichung optimaler Reinigungseffekte und geringstmöglicher Verkrustung hat es sich als zweckmässig erwiesen, wenn der zwischen den Mittellinien bzw. Mittelebenen 18a und 18b der eintrittsseitigen Schlitze 16a gemessene Aufprall-Winkel $\alpha$, unter welchem die Teil-

ströme aufeinanderprallen, wenigstens 15°, besser wenigstens etwa 45° und vorzugsweise ca. 90°-170° beträgt. Ferner sollte der zwischen den Mittellinien bzw. Mittelebenen 19a und 19b der austrittsseitigen Schlitze 16b gemessene Abströmwinkel ß, unter welchem sich die Teilströme nach dem Aufeinanderprallen und der dabei stattfindenden Umlenkung wieder trennen, mindestens 15° bis 45°, vorzugsweise aber ca. 90° bis 160° betragen. In allen Fällen sollte dabei der Umlenkwinkel γ, das ist der Winkel zwischen den Schlitzmittellinien vor und nach der Aufprallzone, wenigstens etwa 80° bis 90°, vorzugsweise etwa 120° bis 140° betragen.

Weiters hat es sich als vorteilhaft erwiesen, wenn die Durchtrittsschlitze 16a und 16b von aussen nach innen sich stetig verengend ausgebildet sind. Die quer zu den Hauptströmungsrichtungen und zu den Längsrichtungen der Profilstäbe gemessenen Weiten 20 der Schlitze unmittelbar vor und nach den Mündungsbereichen 17, also an den engsten Stellen der Schlitze, sollte dabei weniger als 12 mm, vorzugsweise weniger als 6 mm oder sogar weniger als 2 mm betragen. In allen Fällen sollte dabei die Weite 21 des Mündungsbereichs 17 im wesentlichen zwischen dem 0,5- bis 2-fachen, vorzugsweise 0,7- bis 1,4-fachen der Summe der Weiten 20 der zwei ineinandermündenden Schlitze 16a betragen.

Die Druckdifferenz zwischen der Eintritt- und der Austrittseite der Abscheidewand wird so eingestellt, dass die Teilströme in den Schlitzen auf Geschwindigkeiten von mindestens etwa 30 m/sec., vorzugsweise etwa 45 bis 80 m/sec. beschleunigt werden.

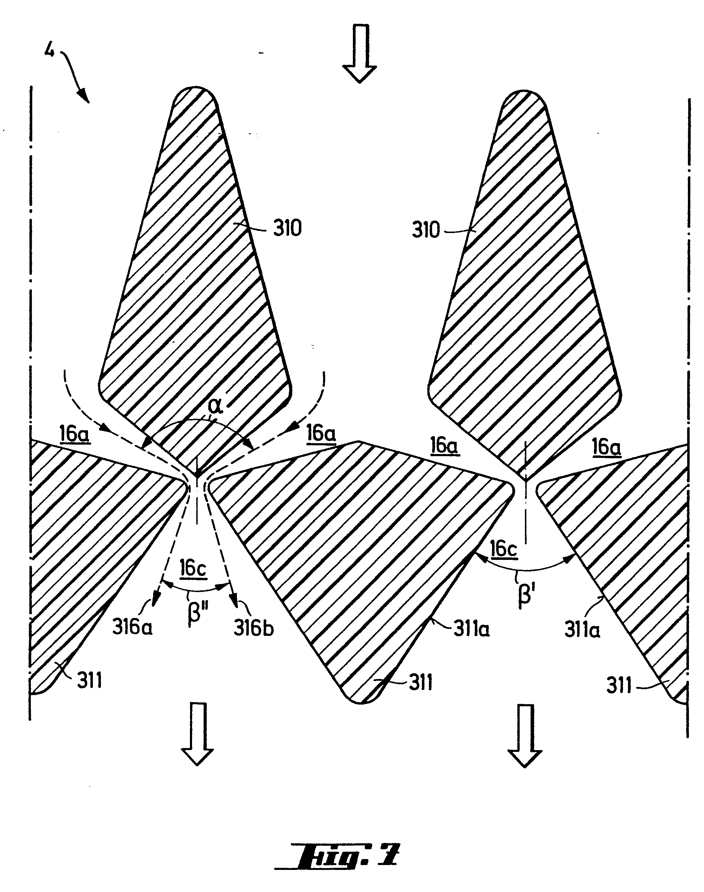

Die Fig. 5 und 6 zeigen ähnlich Fig. 4 teilweise Querschnitte durch leicht modifizierte Abscheidewände. Auch diese Wände sind aus an ihren Enden im gegenseitigen Abstand gehaltenen Profilstäben 109 bis 111, bzw. 209 bis 211 aufgebaut. Diese Profilstäbe besitzen jedoch ein etwas anderes Profil als die gemäss Fig. 4. Die Funktionsweise dieser Wände ist gleich wie die der Wand gemäss Fig. 4.

Bei den vorstehend beschriebenen Ausführungsbeispielen prallen
jeweils nur zwei Teilströme innerhalb der Abscheidewände zusammen.
Selbstverständlich könnte man auch mehrere Teilströme aufeinanderprallen lassen.

Die in Fig. 7 dargestellte Variante einer Abscheidewand ist für
besonders stark verschmutzte Gase geeignet. Bei dieser Variante sind
nur zwei Arten von Profilstäben vorhanden, nämlich die Stäbe 310 und
311, welche zwischen sich Durchtrittsschlitze 16a und 16c bilden.
Jeweils zwei benachbarte Schlitze 16a laufen V-förmig zusammen und
münden gemeinsam Y-artig in einen Schlitz 16c. Es hat sich gezeigt,
dass bei dieser Konstruktion bzw. Anordnung der Stäbe auch unter
schwierigsten Bedingungen der Aufbau einer Verkrustung an den
Engstellen der Abscheidewand vermieden wird. Bezüglich der Form und
Dimensionierung der Schlitze gilt das Gleiche wie bei den vorstehenden Ausführungsbeispielen. Der Winkel α kann bei dieser Variante
ebenfalls bis zu etwa 170° betragen. Der Winkel β' zwischen den
Begrenzungswänden 311a der Profilstäbe 311 kann im Bereich von etwa
20° bis 150°, vorzugsweise etwa 60° bis 80° liegen. Dies entspricht
einem Bereich für den Winkel β" zwischen den Hauptströmungsrichtungen der Teilströme 316a und 316b von etwa 10° bis 75° bzw. 30°
bis 40°.

Für besondere Fälle kann die Lage der Profilstäbe 310 zu den
Profilstäben 311 auch verstellbar sein. Dies gilt natürlich sinngemäss auch für die anderen Ausführungsbeispiele.

Die vorstehend beschriebenen beispielsweisen Bemessungen der
Durchtrittsschlitze in den Abscheidewänden garantieren im allgemeinen auch die Wirksamkeit der Abscheidewände als Flammensperren. Für
Einzelfälle oder besonders kritische Gaszusammensetzungen müssen die
Schlitzabmessungen auf das Zündverhalten dieser Gasgemische abgestimmt werden. Richtlinien dafür finden sich im Buch "Explosionen"
von W. Bartknecht, Springer-Verlag 1978 sowie in den darin zitierten
Literaturstellen.

Die Profilstäbe der Abscheidewände bestehen in der Regel vorzugsweise aus Kunststoff und sind daher nicht beliebig hohen mechanischen Beanspruchungen gewachsen. In Fällen, in denen bei Explosionen
mit höheren Drücken zu rechnen ist, können zu beiden Seiten der
Abscheidewände Gitterroste aus Metall oder ähnliche Stützkonstruktionen angeordnet sein. Selbstverständlich können die Profilstäbe auch selbst entsprechend mechanisch stabil ausgebildet sein.

Patentansprüche

1. Anlage zur Produktion oder Verarbeitung von chemischen Produkten, wobei verstaubte oder anders verunreinigte explosionsfähige Gase oder Gasgemische auftreten, mit einer Flammensperre zur Verhinderung der Ausbreitung allfälliger Explosionen und einer einen Abscheider für Verunreinigungen aufweisenden nass-mechanischen Gaswascheinrichtung, dadurch gekennzeichnet, dass der Abscheider selbst als Flammensperre ausgebildet ist und als solche wirkt.

2. Anlage nach Anspruch 1, dadurch gekennzeichnet, dass der Abscheider selbstreinigend ausgebildet ist.

3. Anlage nach Anspruch 1 oder 2, dadurch gekennzeichnet, dass der Abscheider eine Abscheidewand umfasst, durch die das zu waschende Gas strömt und in der gekrümmte, sich in Strömungsrichtung verengende und wieder erweiternde Durchtrittsschlitze vorgesehen sind.

4. Anlage nach Anspruch 3, dadurch gekennzeichnet, dass die Längen und Weiten der Durchtrittsschlitze auf das Zündverhalten der zu reinigenden Gase bzw. Gasgemische abgestimmt sind.

5. Anlage nach einem der Ansprüche 3 und 4, dadurch gekennzeichnet, dass die Durchtrittsschlitze in der Abscheidewand mindestens paarweise V-förmig in Strömungsrichtung zusammenlaufen und ineinander münden, sodass die durch die Durchtrittsschlitze strömenden Teilströme jeweils paarweise aufeinanderprallen und dadurch umgelenkt werden.

6. Anlage nach Anspruch 5, dadurch gekennzeichnet, dass je zwei der V-förmig zusammenlaufenden Schlitze gemeinsam in einen dritten Schlitz münden, der sich in Strömungsrichtung kontinuierlich erweitert.

7. Anlage nach Anspruch 5, dadurch gekennzeichnet, dass je zwei der V-förmig zusammenlaufenden Schlitze X-artig mit zwei weiteren Schlitzen verbunden sind, welche in Strömungsrichtung V-förmig auseinanderlaufen und sich kontinuierlich erweitern.

8. Anlage nach Anspruch 6 oder 7, dadurch gekennzeichnet, dass sich die Durchtrittsschlitze in Richtung auf ihre gegenseitigen Mündungen hin derart verengen, dass der Gesamtdurchflussquerschnitt der Schlitze im Bereich dieser Mündungen höchstens 15 % der dem Gasstrom von der Abscheidewand gesamthaft dargebotenen Fläche beträgt.

9. Anlage nach einem der Ansprüche 3 bis 8, wobei mehrere explosionsgeschützte, zu reinigendes Gas oder Gasgemisch führende Leitungen vorgesehen sind, dadurch gekennzeichnet, dass die Leitungen in eine gemeinsame nass-mechanische Gaswaschvorrichtung münden, wobei jeder Leitung eine eigene Abscheidewand als Flammensperre zugeordnet ist.

10. Verwendung einer nass-mechanischen Gaswaschvorrichtung gemäss einem der Ansprüche 3 bis 9 als Flammensperre in einer Produktions- oder Verarbeitungsanlage, in der verstaubte oder anders verunreinigte explosionsfähige Gase oder Gasgemische, insbesondere hybride Gemische anfallen.

FO 7.7/KL/sch*

*Fig: 1*

**Fig. 2**

Fig. 3

3/5

0169814

Fig. 4

*Fig. 5*

*Fig. 6*

*Fig. 7*

Europäisches Patentamt

EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | US-A-2 693 294 (H.A. QUIST)<br>* Spalte 1, Zeilen 15-18; Spalte 4, Zeilen 13-31; Spalte 6, Zeilen 10-18; Abbildungen 5,6 *<br><br>--- | 1 | A 62 C 4/02<br>B 01 D 45/04<br>B 01 D 47/06 |
| A | DE-A-2 436 206 (DIE ERBEN DES SMETANCA)<br>* Seite 2, Absatz 1; Seite 4, Zeilen 1-16; Seite 5, Zeilen 5-9; Abbildung 1 *<br><br>--- | 1 | |
| A | FR-A-2 356 450 (CIBA-GEIGY AG)<br><br>* Seite 6, Zeile 15 - Seite 11, Zeile 7; Abbildungen 3-7 * & US - A - 4 159 196 (Cat. D,A)<br><br>--- | 2,3,5, 6 | |
| A | US-A-1 991 445 (C.B. BROSTROM)<br>* Seite 1, Absätze 1-3; Abbildung 1 *<br><br>----- | 1 | RECHERCHIERTE SACHGEBIETE (Int. Cl.4)<br><br><br>A 62 C<br>B 01 D |

Der vorliegende Recherchenbericht wurde für alle Patentansprüche erstellt.

| Recherchenort<br>DEN HAAG | Abschlußdatum der Recherche<br>19-09-1985 | Prüfer<br>PYFFEROEN K. |
|---|---|---|